# EUROPEAN PATENT APPLICATION

(11) **EP 1 354 543 A1**
(43) Date of publication of application: **22.10.2003**
(21) Application number: 03008027.9
(22) Date of filing: 11.04.2003
(51) Int. Cl.: A47J 31/56

(54) **Device for producing hot water, particularly for hot beverage dispensing machines**

(30) Priority: 17.04.2002 IT VR20020039
(71) Applicant: Omnimatic S.p.A., 20083 Bonirola di Gaggiano, (Prov. of Milano) (IT)
(72) Inventor: Mestek, Claudio, 20127 Milano (IT)
(74) Representative: Modiano, Guido, Dr.-Ing.

(57) **Abstract**

A device for producing hot water, particularly for hot beverage dispensing machines, comprising a boiler (2) that is provided with heating means (R) and has an inlet that can be connected to a cold water supply line (3) and an outlet that is connected to a hot water discharge duct (4), said discharge duct (4) being connectable to a device for preparing hot beverages (100), comprising mixing means (5), provided with a first inlet (6), which can be connected to said discharge duct (4) of the boiler (2), a second inlet (7), which can be connected to a cold water supply duct (8), and an outlet (9) that can be connected to said device (100) for preparing hot beverages, and means (20, CU,VM1,VM2) for adjusting at least the quantity of cold water that is supplied to said mixing means (5) according to the hot beverage to be prepared.

## Description

The present invention relates to a device for producing hot water, particularly for hot beverage dispensing machines.

The dispensing machines for preparing hot beverages that are currently most widely used dispense beverages obtained by dissolving powders that are soluble in hot water, and beverages obtained by infusion or decoction, such as for example coffee.

It is well-known that an important requirement for preparing a quality espresso coffee is the use of water at a temperature above 100 °C. Specifically, it is thought that a good infusion requires the use of water at a temperature from 105 to 110 °C.

Beverages produced from soluble powders instead require the use of water at temperatures below 100 °C, in order to prevent, especially in the case of freeze-drying milk powder, formation of lumps generated by the protein fraction of the powders, which over time clog the dispensing ducts.

In particular, it has been found that the temperatures that ensure optimum solubilization are from 80 to 90 °C.

Currently commercially available hot beverage dispensing machines are of the single-boiler type, i.e., they generally use a single boiler to bring to the appropriate temperature the water to be used in preparing the beverages.

In this kind of dispensing machine, the normal operation of the boiler ensures that the temperature of the water in output is the ideal temperature for preparing the soluble products, i.e., approximately 90 °C.

If the user requests the dispensing of an infusion, such as for example coffee, the boiler, by way of an appropriately provided control and actuation system, reaches higher temperatures in order to ensure at the outlet a temperature higher than 100 °C, which as mentioned is ideal for preparing infusions.

A first drawback of single-boiler dispensing machines is the long waiting time in order to bring the temperature of the water in the boiler to a value that ensures the dispensing of a good coffee or in general of a good infusion.

A second drawback of said single-boiler dispensers arises from the fact that soluble beverages selected directly after the dispensing of an infusion are prepared by drawing water that is in the boiler at a temperature that is higher than the one appropriate for the correct preparation of a soluble beverage.

Furthermore, in this situation the temperature of the soluble beverage served in the cup is too high to allow to drink it immediately.

Another drawback of single-boiler dispensing machines is the fact that all the water used to prepare the soluble or infusion-based beverages passes through a single boiler, with the consequence that scale tends to form inside the boiler and over time compromise its efficiency.

In order to overcome these drawbacks, dispensers have been proposed which have two boilers: one used to heat water for producing the soluble beverages (which therefore operates at 80 to 90 °C), and one intended to supply water at the temperature of 105-110 °C, for preparing infusions.

A first drawback of these dispensing machines is their high energy consumption with respect to single-boiler dispensing machines.

Another drawback associated with the constructive choice of using more than one boiler is the fact of having to multiply the number of components, with a consequent significant increase in production and maintenance costs.

The aim of the present invention is to eliminate the drawbacks suffered by known types of hot beverage dispensing machine, by providing a device for producing hot water, particularly for hot beverage dispensing machines, which allows to prepare soluble beverages and infusions always in optimum operating conditions.

Within this aim, an object of the present invention is to provide a device for producing hot water, particularly for hot beverage dispensing machines, which is capable of dispensing a beverage that has a temperature in the cup that is suitable for drinking it immediately, regardless of the type of beverage previously selected.

Another object of the present invention is to provide a device for producing hot water, particularly for hot beverage dispensing machines, which is capable of allowing the user to choose, for the selected beverage, the temperature that he prefers, within the range of the requirements of the preparation of said beverage.

Another object of the invention is to provide a device for producing hot water, particularly for hot beverage dispensing machines, which allows to use a single boiler, at the same time avoiding all the disadvantages associated with conventional single-boiler dispensing machines.

Another object of the present invention is to provide a device for producing hot water that is highly durable, easy and inexpensive to maintain, and has a competitive production cost.

Another object of the invention is to provide a device for producing hot water that is constructively simple and has small dimensions.

Another object of the present invention is to provide a device for producing hot water, particularly for hot beverage dispensing machines, which has low energy consumption, so as to be able to meet in full the strictest standards in this regard.

This aim and these and other objects that will become better apparent hereinafter are achieved by a device for producing hot water, particularly for hot beverage dispensing machines according to the invention, which comprises a boiler that is provided with heating means and has an inlet that can be connected to a cold water supply line and an outlet that is connected to a hot water discharge duct, said discharge duct being connectable to a device for preparing hot beverages, characterized in that it comprises mixing means which are provided with a first inlet that can be connected to the discharge duct of the boiler and with a second inlet that can be connected to a cold water supply duct, the mixing means being provided with an outlet that can be connected to the device for preparing hot beverages, said device for producing hot water further comprising means for adjusting at least the quantity of cold water that is fed to the mixing means according to the hot beverage to be prepared.

Advantageously, a device for producing hot water, particularly for hot beverage dispensing machines according to the invention, has in a preferred embodiment the outlet of the mixing means that comprises at least one channel that is dedicated to the preparation of an infused beverage, which can be connected to the device for preparing hot beverages.

Conveniently, the device for producing hot water, particularly for hot beverage dispensing machines, according to the invention has in a further preferred embodiment the outlet of the mixing means that comprises at least one channel that is dedicated to the preparation of a soluble beverage, which can be connected to the device for preparing hot beverages.

Further characteristics and advantages will become better apparent from the description of some preferred but not exclusive embodiments of a device for producing hot water, particularly for hot beverage dispensing machines, according to the invention, illustrated only by way of non-limitative example in the accompanying drawings, wherein:
Figure 1 is a block diagram of a device for producing hot water, particularly for hot beverage dispensing machines, according to the invention;
Figure 2 is a block diagram, similar to Figure 1, of a device for producing hot water;
Figure 3 is a top view of mixing means and distribution means of a device for producing hot water, particularly for hot beverage dispensing machines; and
Figure 4 is a block diagram of a further constructive embodiment of a device for producing hot water according to the invention.

With reference to the figures, a device for producing hot water 1, particularly for hot beverage dispensing machines, according to the invention, comprises a boiler 2: said boiler 2 is provided with an inlet that can be connected, by way of any adapted devices, to a cold water supply line 3, and with an outlet that is connected to a duct for discharging cold water 4.

More particularly, the boiler 2 is provided with heating means R, for heating the incoming hot water.

Also according to the invention, the hot water discharge duct 4 can be connected, by way of devices that will be described hereinafter, to a device for preparing hot beverages 100, such as for example infusions (coffee) and soluble beverages (chocolate, tea, milk, et cetera).

The device for producing hot water 1 is provided with mixing means 5, provided with a first inlet 6, which is connected to the discharge duct 4 of the boiler 2, and with a second inlet 7, which can be connected to a cold water supply duct 8.

The mixing means 5 are further provided with an outlet 9, which can be connected to the device for preparing hot beverages 100 so as to allow the outflow, from the mixing means 5 toward said preparation device 100, of the hot water required for the dispensing of the various beverages.

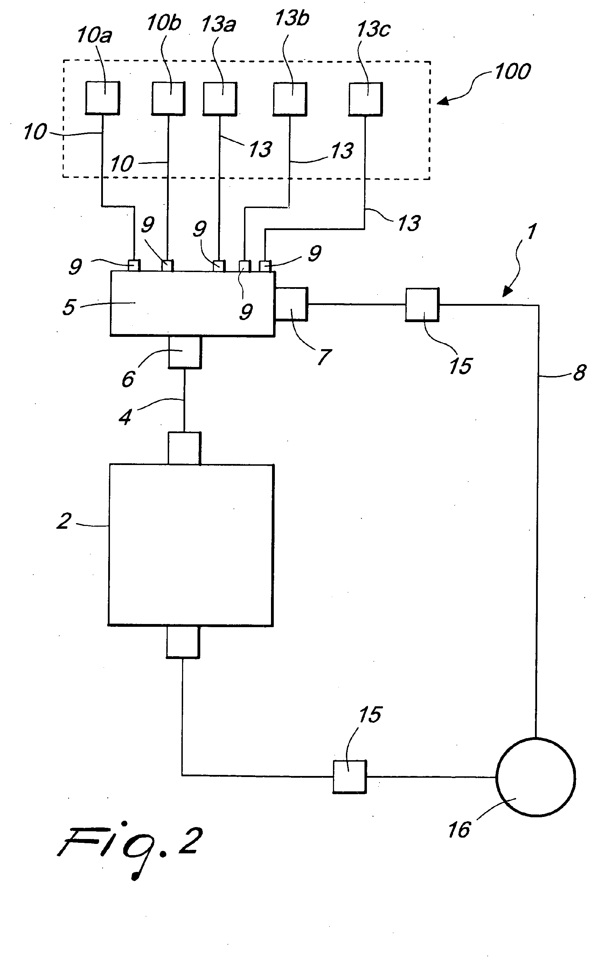

The mixing means 5 can be constituted, as shown more clearly in Figure 2, by a chamber that is for example shaped externally like a parallelepiped.

According to the invention, a device for producing hot water 1 is provided with means for adjusting at least the amount of cold water that enters the mixing means 5 through the cold water supply duct 8.

In particular, said adjustment means are capable of managing and adjusting the quantity of cold water introduced in the mixing means 5 according to the hot beverage to be prepared that has been selected by the user of the dispensing machine.

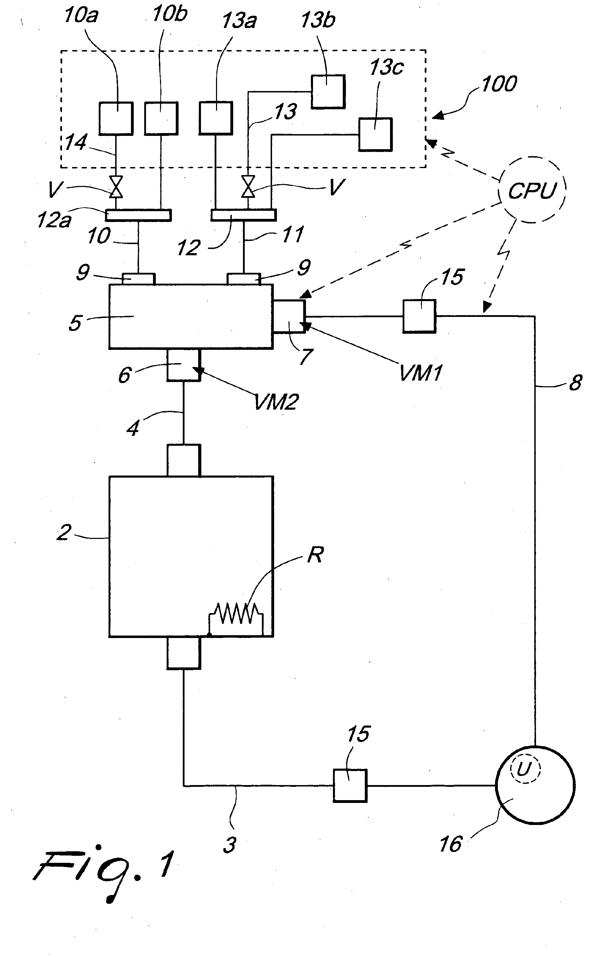

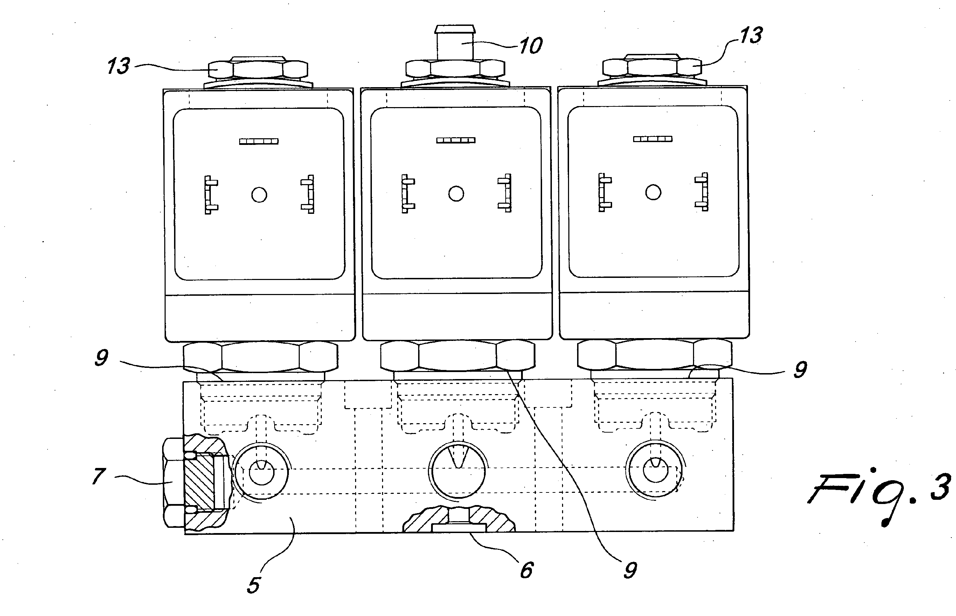

Conveniently, as shown schematically in Figure 1 and shown in Figure 3, the outlet 9 of the mixing means 5 comprises at least one channel 10 that is dedicated to the preparation of an infused beverage.

Said channel allows, if the user selects this type of beverage, to send the water mixed by the mixing means 5 to a station (10a, 10b) that is designed to prepare the chosen infusion (for example espresso coffee or optionally decaffeinated coffee or other infusions).

The connection between the mixing means 5 and the stations (10a, 10b) can be ensured by opening a functional connection valve, which is preferably constituted by an electric valve.

Advantageously, the outlet 9 of the mixing means 5 has at least one channel 11 that is dedicated to the preparation of a soluble beverage, which optionally allows the functional connection between the mixing means 5 and stations intended to prepare the soluble beverages (13a, 13b, 13c).

According to the embodiment shown schematically in Figure 1, the channel dedicated to the preparation of a soluble beverage 11 is connected to distribution means 12, which are in turn connected by means of one or more outlet ducts 13 to a respective station for preparing a soluble beverage (13a, 13b, 13c).

Conveniently, it is possible to provide, for example upstream of each outlet duct 13, an electric valve V that is adapted to establish or interrupt the flow of water toward the stations for preparing the soluble beverages.

Advantageously, the distribution means 12 are spaced from the boiler 2 so as to avoid heating of the metallic parts, usually made of brass, by thermal conduction. Such heating causes scale, which over time increases the load losses and makes it necessary to replace the damaged components.

Preferably, said adjustment methods also allow to control the amount of water that arrives from the discharge duct 4 and supplies the mixing means 5.

Advantageously, the adjustment means comprise a central data processing unit CPU that is capable of receiving from a user interface, for example of a per se known type, a plurality of information data related to the beverage chosen by the user.

In particular, such information relates not only to the type of beverage chosen (coffee, tea, chocolate, et cetera), as already occurs for currently commercially available dispensing machines, but also the thermal condition (lukewarm, warm, hot beverage) in which the user wishes to drink the beverage.

Since the thermal condition in the cup, as well as in the preparation station, is determined, as clearly understandable from the above description, by the quantities of cold and hot water that enter the mixing means 5, the adjustment means are provided with at least one first volumetric meter VM1 for measuring precisely the quantity of cold water fed to the mixing means 5 and advantageously with a second volumetric meter VM2 that is adapted to measure the quantity of hot water that arrives from the discharge duct 4 and enters the mixing means 5.

As shown schematically in Figures 1 and 2, both the cold water supply line 3 (which can be connected to the boiler 2) and the cold water supply duct 8 (which can be connected to the mixing means 5) are provided, along their extension, with a respective one-way valves 15; in particular, said one-way valve 15 allow the passage of water, and of fluids in general, only in one direction.

Advantageously, the cold water supply line 3 and the cold water supply duct 8 can be connected, for example by means of a valve 15 which is a two-way valve, to a single source of cold water 16, such as the water distribution mains.

In this manner, as will become apparent from the figures, the cold water supply duct 8 constitutes a simple branch of the line 3.

Operation of the device for producing hot water particularly for hot beverage dispensing machines according to the invention is as follows.

The user, by acting on the user interface, generally constituted by a keypad, selects the type of beverage being sought.

Depending on whether such beverage is constituted by an infusion or by a soluble beverage, the central processing unit CPU controls, by acting on the valves located at the inlets 6 and 7 of the mixing means 5, the flow of hot water and cold water that enters the mixing means 5, dosing their quantities so as to establish a temperature of the mixed water at the outlet that is suitable for preparing the selected beverage.

Advantageously, the boiler 2 operates so as to dispense, in the discharge duct 4, water at a temperature of approximately 105-110 °C, which as explained is considered the optimum temperature for preparing an infusion.

Accordingly, when the user selects an infusion, the flow in the cold water supply duct 8 is interrupted; in this manner, the mixing means 5 receive in input only the hot water that arrives from the discharge duct 4 of the boiler 2 and therefore only have the function of directing the water to the station for preparing the selected infusion.

If the user instead selects a soluble beverage, the central processing unit, by acting first of all on said two-way valve, causes a flow of cold water in the cold water supply duct 8.

When the volumetric meters, advantageously arranged at the first and second inlets 6 and 7, have measured a quantity of hot water and cold water that is suitable to obtain, in output from the mixing means 5, a temperature that is ideal for preparing the selected soluble beverage, the central processing unit sends a command to interrupt the flows of water of the mixing means 5.

A particular aspect of the present invention is the fact that it is possible to provide, in a separate sector of the keypad that constitutes the user interface, a plurality of keys that allow to select different temperature conditions at which the intended beverage can be drunk.

For example, the temperature conditions that can be chosen by means of said keys are "cold", "lukewarm", "warm" and "hot".

As an alternative, it is possible to provide two keys (bearing the symbols "+" and "-") for determining, on a graduated scale, the intended temperature condition.

In each instance, as already explained above, these temperature conditions are determined by the quantity of cold water that enters the mixing means 5.

The invention thus conceived is susceptible of numerous modifications and variations, all of which are within the scope of the appended claims.

Thus, for example, the outlet 9 of the mixing means 5 can comprise a plurality of openings, each of which constitutes the inlet of a respective outlet duct that is designed to send water to a preset preparation station.

Another refinement of the invention is the fact that it has additional distribution means 12a, which are interposed between the channel dedicated to the preparation of an infused beverage 10 and ducts 14 leading to the infusion preparation stations (10a,10b).

In this manner, if more than one infusion can be selected, said additional distribution means direct the hot water to the station assigned to producing the selected beverage and at the same time avoid, as already explained, heating of the electric valves used to supply the water to said stations.

Another modification, schematically similar to the devices of (see circled U in Figure 1) the figures, can consist for example in providing a single volumetric meter instead of the two cited above; said meter, being provided with a three-way valve, is preset to send in input to the device 1 a preset overall quantity of water to be managed and then dispensed to the cup.

According to this modification, the source of cold water 16 is connected to the cold water supply line 3 and to the cold water supply duct 8 by interposing a unit U for measuring and distributing the water that arrives from the source of cold water 16, said unit being indeed constituted by a volumetric meter and by a three-way valve that is actuated by the central processing unit.

In particular, the three-way valve is designed to receive in input a preset quantity of water, measured by the volumetric meter, and to divide said preset quantity of water by conveying it toward two branches, constituted respectively by the cold water supply line 3 and by the cold water supply duct 8, according to percentages that are determined according to the temperature selected by the user.

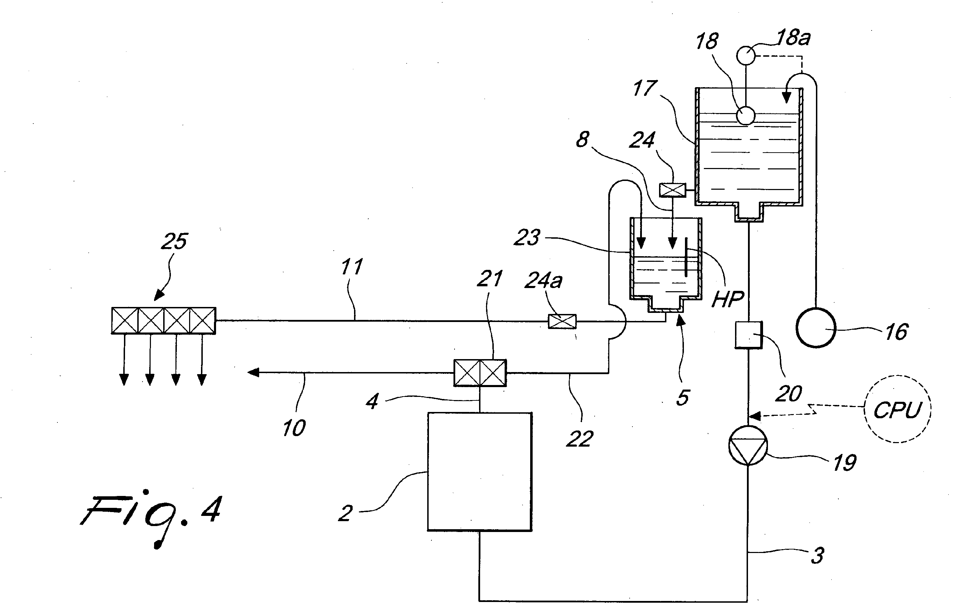

Another embodiment of the device for producing hot water 1, again according to the invention, is illustrated, by way of example, in Figure 4, which is described hereinafter.

As shown first of all in Figure 4, said embodiment of the device 1 has a tank 17, advantageously of the open-top type, which receives water from the cold water source 16.

The tank 17, which in technical jargon is known as an air breaker, has the dual task of keeping under a constant head the hydraulic circuit of the device 1 and at the same time of keeping a certain reserve of water always available to said device 1.

The level of the water inside the tank 17 is controlled by a floater 18, which is functionally connected to means 18a that are designed to establish or interrupt the flow of water that arrives from the source of water 16 to the tank 17.

The tank 17 is connected to the intake of a pump 19, on which the adjustment means are arranged; said adjustment means are conveniently constituted by a volumetric meter 20, generally of the impeller type, which is designed to control the quantity of water sent to the boiler, and is controlled by the central processing unit.

The cold water supply line 3 exits from the delivery of the pump 19 and leads to the inlet of the boiler 2.

The hot water discharge duct 4 is connected to the outlet of the boiler 2 and to a two-way block 21, which is provided with two electric valves that are driven by the central processing unit and from which the channel dedicated to the preparation of an infused beverage 10 and a branch duct 22 for the hot water that exits from the boiler branch out respectively; said channel directly supplies a device that is dedicated exclusively to the preparation of infusions, and said duct can be connected, with the mixing means 5 interposed, to a device that is dedicated exclusively to the preparation of the soluble beverages.

In particular, the mixing means 5 are advantageously constituted in this case by a tray 23, particularly of the open-top type, in which the branch duct 22 and the cold water supply duct 8 merge; the duct 8 draws, by means of a first gravity-fed electric valve 24, from the tank 17 substantially proximate to the bottom.

Conveniently, the tray 23 is provided with a heat probe HP, which detects the temperature of the liquid inside it and is associated with the central processing unit.

The tray 23 has an outlet on the bottom, which is connected to the channel that is dedicated to the preparation of a soluble beverage 11 by interposing a second gravity-fed electric valve 24 a.

The channel dedicated to the preparation of a soluble beverage 11 ends with a set of electric valves 25, each of which is designed to establish or interrupt the inflow of water to a respective station for preparing a soluble beverage.

Operation of the device 1 according to this constructive variation is as follows.

Again by acting on said interface keypad, the user can select the type of beverage and the temperature that he prefers.

If the choice of the user is a soluble beverage, the pump 19, driven by the central processing unit, draws from the tank 17 the quantity of water to be sent to the boiler 2 which ensures, once mixed with a suitable quantity of cold water in the mixing means 5, the temperature that is suitable for preparing the soluble beverages or optionally the temperature selected specifically by the user.

During the suction of the pump 19, the volumetric meter 20 checks that said quantity of water is actually sent to the boiler 2.

Said water, after being heated in the boiler 2, reaches the two-way block 21 arranged at the end of the discharge duct 4.

Under the control of the central processing unit, the two-way block 21 closes the channel dedicated to the preparation of an infused beverage 10 and opens the branch duct 22, in order to convey said quantity of water to the tray 23.

The subsequent opening of the first gravity-fed electric valve 24, again under the control of the central processing unit, allows the inflow into the tray 22 of cold water that arrives from the tank 17 by means of the cold water supply duct 8.

When the level that corresponds to the total volume of water to be dispensed into the cup is reached in the tray 22, on the one hand the central processing unit CPU activates the closure of the first gravity-fed electric valve 24 and on the other hand the head thus formed above the second gravity-fed electric valve 24 is capable of opening it, accordingly allowing the water poured into the tray 22, by way of the branch duct 22 and the cold water supply duct 8, to flow through the channel dedicated to the preparation of a soluble beverage 11 and to reach the set of electric valves 25, which directs it to the station for preparing the soluble beverage selected by the user.

The tank 17 is then filled again with water that arrives from the cold water source 16 up to a preset level, which is controlled by the floater 18.

If the user's choice consists of an infusion, the quantity of water drawn from the tank 17 by the pump 19 and introduced in the boiler 2 is equal to the total quantity of water dispensed into the cup.

The opening of the channel dedicated to the preparation of an infused beverage 10, performed by the two-way block 21, allows to supply the device for preparing an infused beverage.

The device 1 conceived according to the constructive variation described above, in addition to being particularly suitable for the use of gravity-fed electric valves, which as is known are easy to maintain and have a low cost, allows to reduce the onset of scale caused by the sudden hot/cold temperature reductions that occur especially in the mixing means 5.

Furthermore, in this manner it is possible to have a visually accessible hydraulic control unit that can be inspected easily.

In practice, the materials used, so long as they are compatible with the contingent use, as well as the dimensions and shapes, may be any according to requirements.

In practice it has been found that in all the embodiments the invention has achieved the intended aim and objects.

In particular, it has been found that the device for producing hot water according to the invention, despite using a single boiler, has a performance that is comparable to, if not higher than, that of devices that use two boilers, especially in terms of energy consumption.

Furthermore, tests that have been conducted have allowed to verify that the temperature of the beverage in the cup is independent of the previous selection.

In this manner, in particular, it is possible to obtain a soluble beverage at the optimum temperature even after dispensing an infused beverage.

Furthermore, with respect to conventional single-boiler dispensing machines, the fact that part of the necessary water bypasses the boiler in preparing soluble beverages relieves the boiler of the workload and accordingly has extended its useful life.

All the details may further be replaced with other technically equivalent elements.

The disclosures in Italian Patent Application No. VR2002A000039 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A device for producing hot water, particularly for hot beverage dispensing machines, comprising a boiler (2) that is provided with heating means (R) and has an inlet that can be connected to a cold water supply line (3) and an outlet that is connected to a hot water discharge duct (4), said discharge duct (4) being connectable to a device for preparing hot beverages (100), **characterized in that** it comprises mixing means (5), provided with a first inlet (6), which can be connected to said discharge duct (4) of the boiler (2), a second inlet (7), which can be connected to a cold water supply duct (8), and an outlet (9) that can be connected to said device (100) for preparing hot beverages, and means (20, CU,VM1,VM2) for adjusting at least the quantity of cold water that is supplied to said mixing means (5) according to the hot beverage to be prepared.

2. The device for producing hot water according to claim 1, **characterized in that** said outlet (9) comprises at least one channel (10) for the preparation of an infused beverage that can be connected to said hot beverage preparation device (100).

3. The device for preparing hot water according to claim 1, **characterized in that** said outlet (9) comprises at least one channel (11) for the preparation of a soluble beverage that can be connected to said hot beverage preparation device (100).

4. The device for preparing hot water according to claim 3, **characterized in that** said channel (10) for the preparation of a soluble beverage can be connected to distribution means (12) which are connected to outlet ducts (13), each of which can be connected, depending on the soluble beverage to be prepared, to a station (13a,13b,13c) for preparing said soluble beverage to be prepared.

5. The device for preparing hot water according to one or more of the preceding claims, **characterized in that** said channel (10) dedicated to the preparation of an infused beverage can be connected to distribution means (12a) that are connected to outlet ducts (14), each of which can be connected, depending on the soluble beverage to be prepared, to a station (10a, 10b) for preparing said infused beverage to be prepared.

6. The device for producing hot water according to one or more of the preceding claims, **characterized in that** said at least one channel (10) for the preparation of an infused beverage comprises at least one valve (V) for functional connection between said mixing means (5) and said device for preparing hot beverages (100).

7. The device for producing hot water according to one or more of the preceding claims, **characterized in that** said at least one channel (11) to the preparation of a soluble beverage comprises at least one valve (V) for functional connection between said mixing means (5) and said hot beverage preparation device (100).

8. The device for producing hot water according to one or more of the preceding claims, **characterized in that** said adjustment means comprise a central unit (CPU) for processing data related to a beverage selected by the user, said data comprising indications regarding the cup temperature of said selected beverage.

9. The device for producing hot water according to one or more of the preceding claims, **characterized in that** said adjustment means comprise at least one first volumetric meter (VM1) for measuring said quantity of cold water fed to said mixing means (5).

10. The device for producing hot water according to one or more of the preceding claims, **characterized in that** said adjustment means comprise a second volumetric meter (VM2) for measuring the quantity of hot water fed to said mixing means.

11. The device for producing hot water according to one or more of the preceding claims, **characterized in that** said mixing means comprise a mixing chamber (5).

12. The device for producing hot water according to one or more of the preceding claims, **characterized in that** said at least one valve (V) is an electric valve controlled by said central processing unit (CPU).

13. The device for producing hot water according to one or more of the preceding claims, **characterized in that** said cold water supply duct (8) comprises a one-way valve (15).

14. The device for producing hot water according to one or more of the preceding claims, **characterized in that** said cold water supply line (3) comprises a one-way valve (15).

15. The device for producing hot water according to one or more of the preceding claims, **characterized in that** said cold water supply duct (8) and said cold water supply line (3) are connected to a source of cold water (16).

16. The device for producing hot water according to one or more of the preceding claims, **characterized in that** said cold water source (16) is connected to said cold water supply line (3) and to said cold water supply duct (8) through two-way valves (15).

17. The device for producing hot water according to one or more of the preceding claims except claim 16, **characterized in that** said cold water source (6) is connected to said cold water supply line (3) and to said cold water supply duct (8) through a unit (U) for measuring and distributing the water that arrives from said cold water source (16) controlled by the central processing unit (CPU), said measurement and distribution unit (U) comprising a volumetric meter and a three-way valve, said volumetric meter being adapted to dose the water that arrives from said source of cold water (16) and said three-way valve being adapted to convey the water dosed by said volumetric meter toward said cold water supply line (3) and toward said cold water supply duct (8), in percentages that are set according to the cup temperature of the beverage selected by the user.

18. The device for producing hot water according to one or more of the preceding claims, **characterized in that** it comprises a tank (17) that can be connected to said cold water source (16) and is connected, through said adjustment means (20), to the intake of a pump (19), which has a delivery that is connected to said cold water supply line (3), said discharge duct (4) of said boiler (2) being connectable to said channel (10) dedicated to the preparation of an infused beverage and to a branch duct (22), which leads into said first inlet of said mixing means (5), said cold water supply duct (8) being connectable to said tank (17) and said outlet of said mixing means (5) being connectable to said channel (11) dedicated to the preparation of a soluble beverage.

19. The device for producing hot water according to claim 18, **characterized in that** said tank (17) is of the open-top type and is provided with a floater (18) that is functionally associated with means (18a) meant to determine or interrupt the inflow into said tank (17) of the water that arrives from said source of cold water (16).

20. The device for producing hot water according to one or more of claims 18 and 19, **characterized in that** said adjustment means comprise a volumetric meter (20) that is provided with an impeller and is controlled by said central processing unit (CPU).

21. The device for producing hot water according to one or more of claims 18 to 20, **characterized in that** it comprises, at the end of said discharge branch duct (22), a two-way block (21), which has two electric valves driven by said central processing unit (CPU), said channel (10) dedicated to the preparation of an infused beverage and said branch duct (22) branching out respectively from said two electric valves (21).

22. The device for producing hot water according to one or more of claims 18 to 21, **characterized in that** said mixing means (5) comprise an open-top tray (23), which is provided with a heat probe (HP) that is associated with said central processing unit (CPU).

23. The device for producing hot water according to one or more of claims 18 to 22, **characterized in that** it comprises a first gravity-fed electric valve (24), which is interposed between said tank (17) and said cold water supply duct (8), and a second gravity-fed electric valve (24a) interposed between said tray (23) and said channel (10) dedicated to the preparation of a soluble beverage.

24. The device for producing hot water according to one or more of claims 18 to 23, **characterized in that** said channel (11) dedicated to the preparation of a soluble beverage ends in a set of electric valves (25) controlled by said central processing unit (CPU), each one of said electric valves (25) being connected to a respective station for preparing a soluble beverage.
